# EUROPÄISCHE PATENTANMELDUNG

(11) **EP 4 282 712 A1**
(43) Veröffentlichungstag der Anmeldung: **29.11.2023**
(21) Anmeldenummer: 23174407.9
(22) Anmeldetag: 21.05.2023
(51) Int. Cl.: B60R 22/24, B60R 21/02

(54) **FREIZEITFAHRZEUG, INSBESONDERE WOHNMOBIL, UND GURTBOCKANORDNUNG**

(30) Priorität: 23.05.2022 DE 102022112999
(71) Anmelder: Hymer GmbH & Co. KG, 88339 Bad Waldsee (DE)
(72) Erfinder: Fiedler, Andreas, 89231 Neu-Ulm (DE); Sawetzki, Bernhard, 88364 Wolfegg (DE); Hörmann, Hannes, 88339 Bad Waldsee (DE)
(74) Vertreter: Waller, Stefan

(57) **Zusammenfassung**

Gurtbockanordnung (2) für ein Freizeitfahrzeug (1), insbesondere ein Wohnmobil, mit einem Gurtbock (3) und zumindest einem Verbindungselement (4), das den Gurtbock (3) mit einer Seitenwand (5) des Freizeitfahrzeugs (1) verbindet. Das Verbindungselement (4) ist im montierten Zustand bezüglich einer Fahrtrichtung (8) des Freizeitfahrzeugs (1) betrachtet zumindest im Wesentlichen in einem Seitenbereich (9) des Gurtbocks (3), der sich seitlich neben dem Gurtbock (3) befindet, mit der Seitenwand (5) des Freizeitfahrzeugs (1) verbunden. Ferner ist ein Freizeitfahrzeug (1) mit solch einer Gurtbockanordnung (2) angegeben.

## Beschreibung

Die Erfindung betrifft ein Freizeitfahrzeug, insbesondere ein Wohnmobil, mit einer Gurtbockanordnung. Solch eine Gurtbockanordnung eignet sich insbesondere für eine hintere, insbesondere zweite oder dritte, Sitzreihe in dem Freizeitfahrzeug.

Aus der EP 3 539 818 A1 ist ein Gurtgestell für einen Fahrzeugsitz oder eine Fahrzeugsitzbank in einem Fahrzeug bekannt. Das bekannte Gurtgestell weist Anbringmittel zur Anbringung des Gurtgestells an einer Fahrzeugstruktur im Bereich eines Fahrzeugbodens auf, so dass im angebrachten Zustand ein unterer Endabschnitt des Gurtgestells fixierbar ist. Ferner ist eine Stützanordnung mit einem Stützorgan zur Abstützung des Gurtgestells an der Fahrzeugstruktur vorgesehen. Das Stützorgan ist in vertikaler Richtung betrachtet nach oben beabstandet zum unteren Endabschnitt des Gurtgestells vorhanden. Dabei ist das Stützorgan am Gurtgestell nach vorne gemäß einer Fahrtrichtung des Fahrzeugs abstehend angeordnet und derart ausgebildet, dass es im Bereich der Fahrzeugstruktur, welche oberhalb des Fahrzeugbodens vorhanden ist, verbindbar ist.

Aus der EP 3 508 373 B1 ist ein Gurtgestell für einen Fahrzeugsitz oder eine Fahrzeugsitzbank bekannt. Bei diesem bekannten Gurtgestell ist das Rückhalteorgan an einem Montagepunkt des Gurtgestells montiert, wobei der Montagepunkt ausgehend von einer Aufstellfläche des Gurtgestells zum Aufstellen auf dem Fahrzeugboden in einer vertikalen Erstreckung nach oben gesehen in einem Bereich von einem 100 mm bis 650 mm am Gurtgestell vorhanden ist. Das Rückhalteorgan ist hierbei derart vorhanden, dass eine Verformung des an der Fahrzeugstruktur angeordneten Gurtgestells im Belastungsfall vorgebbar ist.

Aus der EP 3 321 126 B1 ist ein weiteres Gurtgestell bekannt, das ein Rückhalteorgan aufweist, das derart vorhanden ist, dass eine Verformung eines an der Fahrzeugstruktur angeordneten Gurtgestells im Belastungsfall vorgebbar ist.

Der vorliegenden Erfindung liegt die Aufgabe zugrunde, eine Gurtbockanordnung für ein Freizeitfahrzeug und ein Freizeitfahrzeug anzugeben, die eine verbesserte Ausgestaltung und Funktionsweise ermöglichen.

Die Aufgabe wird durch eine Gurtbockanordnung mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Aufgabe wird durch eine Gurtbockanordnung für ein Freizeitfahrzeug, insbesondere ein Wohnmobil, mit einem Gurtbock und zumindest einem Verbindungselement, das den Gurtbock mit einer Seitenwand des Freizeitfahrzeugs verbindet, gelöst, wobei das Verbindungselement im montierten Zustand bezüglich einer Fahrtrichtung des Freizeitfahrzeugs betrachtet, zumindest im Wesentlichen in einen Seitenbereich des Gurtbocks, der sich seitlich neben dem Gurtbock befindet, mit der Seitenwand des Freizeitfahrzeugs verbunden ist.

Außerdem wird die Aufgabe durch ein Freizeitfahrzeug, insbesondere ein Wohnmobil, mit zumindest einer solchen Gurtbockanordnung und zumindest einer der Gurtbockanordnung zugeordneten Seitenwand gelöst, wobei der Gurtbock über das zumindest eine Verbindungselement mit der zumindest einen Seitenwand verbunden ist.

Bei der Ausgestaltung des Gurtbocks ist es denkbar, dass dieser als Stahl-Schweißkonstruktion ausgestaltet ist. In vorteilhafter Weise kann allerdings auch eine bevorzugte Ausgestaltung aus einem Kunststoff, insbesondere einem faserverstärkten Kunststoff, erfolgen. Ferner kann der Gurtbock einen Abstützfuß aufweisen, der in Fahrtrichtung betrachtet nach vorne eine Abstützung ermöglicht. Hierbei kann in vorteilhafter Weise eine Ausgestaltung ermöglicht werden, bei der der Abstützfuß nicht notwendigerweise mittig bezüglich einer Querrichtung zur Fahrtrichtung am Gurtbock angebracht ist. Insbesondere muss der Abstützfuß bei zwei Sitzplätzen dann nicht notwendigerweise in der Mitte zwischen den Sitzplätzen angeordnet sein. Hierbei kann in vorteilhafter Weise eine zusätzliche Abstützung auf der gegenüberliegenden Seite des Abstützfußes eingespart werden. Drehmomente beziehungsweise Torsionsmomente können in vorteilhafter Weise kompensiert werden. Außerdem eignet sich die vorgeschlagene Ausgestaltung insbesondere für ein als Campervan ausgestaltetes Freizeitfahrzeug. Hierbei ist nicht notwendigerweise eine Verbindung mit einer C-Säule erforderlich. Die Verbindung kann ganz allgemein mit der Seitenwand oder einer Seitenwandstruktur bestehen.

Bei einem Test, insbesondere einem Zugversuch, oder im Belastungsfall durch einen Unfall zieht eine Vorrichtung für den Zugversuch oder ein Dummy beziehungsweise der Passagier am Gurtbock (Gurtgestell). Speziell bei einer asymmetrischen Abstützung kommt es zu Torsionsmomenten um die Fahrzeughochachse beziehungsweise bei einseitiger Belastung am fahrzeugäußeren Sitzplatz zu einer Überlastung der Konstruktion. Hierdurch kann unter Umständen die gesetzliche Vorgabe der Vorverlagerung des oberen festen Gurtumlenkpunkts überschritten werden oder sogar ein Versagen der Struktur auftreten. Dies wird durch die vorgeschlagene Ausgestaltung mit zumindest einem Verbindungselement verhindert. Hierdurch kann in vorteilhafter Weise auch bei einer asymmetrischen Abstützung ein Torsionsmoment aufgenommen werden und eine Überlastung der Konstruktion verhindert werden. Somit können insbesondere gesetzliche Vorgaben eingehalten werden. Ein Versagen der Struktur wird verhindert.

Hierbei besteht eine besonders vorteilhafte Ausgestaltung und Funktionsweise. Insbesondere ist eine kompakte Ausgestaltung möglich, die in Fahrtrichtung betrachtet, keinen oder nur geringfügigen Einfluss auf den Raum vor dem Gurtbock und auf den Raum hinter dem Gurtbock nimmt. Hierdurch bleiben konstruktive Freiheiten in Bezug auf eine Vorderseite des Gurtbocks, wo sich beispielsweise ein Sitzpolster befinden kann, und eine Rückseite des Gurtbocks, wo beispielsweise andere Einbauteile des Freizeitfahrzeugs vorhanden sind, zumindest im Wesentlichen erhalten. Außerdem werden Verletzungsrisiken durch ein Einklemmen von Körperteilen, mögliche Kollisionen mit Körperteilen, scharfe Kanten, Bruchkanten oder dergleichen verhindert.

Vorteilhaft ist es, dass der Seitenbereich des Gurtbocks im montierten Zustand zumindest im Wesentlichen innerhalb einer Projektion des Gurtbocks auf die Seitenwand liegt, die senkrecht zu der Fahrtrichtung und parallel zu einem Laufboden des Freizeitfahrzeugs ist. Somit steht das Verbindungselement in Fahrtrichtung betrachtet vorzugsweise zumindest nicht wesentlich von dem Gurtbock aus betrachtet nach vorne oder hinten ab. Damit wird aber auch ein Einfluss auf andere Elemente des Freizeitfahrzeugs erheblich verringert und eine Kollision mit Körperteilen oder dergleichen von vornherein vermieden. Hierbei kann durch das zumindest eine Verbindungselement dennoch eine wesentliche Stabilisierung des Gurtbocks in Bezug auf einen Zugversuch beziehungsweise eine Verformung bei einem Crash erzielt werden. Gegebenenfalls ist auch eine asymmetrische Anordnung zumindest eines Stützfußes oder dergleichen möglich.

Vorteilhaft ist es, dass das Verbindungselement im montierten Zustand durch zumindest eine Schraubverbindung mit dem Gurtbock verbunden ist. Hierdurch ist eine vorteilhafte Verbindung möglich. Insbesondere kann auf Schweißverbindungen, die gegebenenfalls zur Materialschwächung führen können, verzichtet werden. Vorteilhaft ist es auch, dass das Verbindungselement im montierten Zustand durch zumindest eine Schraubverbindung mit der Seitenwand verbunden ist. Hierdurch kann auf eine Schweißverbindung, die zur Materialschwächung führen kann, verzichtet werden. Ferner ermöglichen solche Schraubverbindungen bzw. ganz allgemein mechanische Verbindung, insbesondere formschlüssige Verbindung, auch eine vorteilhafte Montage.

Vorteilhaft ist es, dass das Verbindungselement im montierten Zustand beabstandet zu einer Säule, insbesondere der C-Säule, des Freizeitfahrzeugs mit der Seitenwand und/oder mit einer an der Seitenwand ausgestalteten Längsstrebe und/oder mit einer an der Seitenwand vorgesehenen Seitenwandverstärkung, insbesondere Verstärkungsplatte, verbunden ist. Hierdurch ist eine vorteilhafte Verbindung mit der Seitenwand des Freizeitfahrzeugs möglich. Insbesondere besteht eine freie Wahl der Position und keine Notwendigkeit einer Anbindung an die C-Säule.

Vorteilhaft ist es, dass das Verbindungselement zumindest ein L-förmiges Teil umfasst. Hierdurch ist eine kompakte und belastbare Ausgestaltung möglich. Ferner kann hierdurch ein geringeres Gewicht (eine geringe Masse) erzielt werden. Vorteilhaft ist es auch, dass das Verbindungselement ein Doppel-L-förmiges Teil umfasst. Hierdurch ist eine vorteilhafte Anordnung neben dem Gurtbock möglich. Ferner ergibt sich eine zuverlässige Verbindung.

Vorteilhaft ist es allerdings auch, dass das Verbindungselement ein erstes Befestigungsteil, das im montierten mit der Seitenwand verbunden ist, und ein Verbindungsteil aufweist, das das erste Befestigungsteil mit dem zweiten Befestigungsteil verbindet, und dass das erste Befestigungsteil und das zweite Befestigungsteil zumindest näherungsweise parallel zueinander orientiert sind. Speziell können das erste Befestigungsteil und das zweite Befestigungsteil parallel zueinander angeordnet sein. Hierdurch ist eine kompakte und belastbare Befestigung möglich. Ferner ergibt sich eine vorteilhafte Anordnung neben dem Gurtbock.

Vorteilhaft ist es auch, dass das Verbindungselement einen Bolzen und zumindest einen an dem Bolzen angebrachten, vorzugsweise zylinderförmigen Kopf aufweist. Hierdurch kann das Verbindungselement auch mit einem Drehpunkt versehen sein. Ferner ist es bei einer abgewandelten Ausgestaltung denkbar, dass das Verbindungselement mit einem Gelenk versehen ist. Des Weiteren ist es denkbar, dass mehrere Verbindungselemente vorgesehen sind, die den Gurtbock jeweils mit der Seitenwand verbinden. Dadurch können vorteilhafte Seitenwandanbindungen realisiert werden.

In vorteilhafter Weise kann das Verbindungselement zumindest teilweise aus einem duktilen Werkstoff gebildet sein. Hierdurch kann das Verbindungselement durch Verformung Energie abbauen. Das Verbindungselement kann dennoch leicht ausgebildet werden. Insbesondere kann das Verbindungselement eine Masse von weniger als 1 kg aufweisen. Das Verbindungselement kann gegebenenfalls als Blechbiegeteil ausgestaltet sein.

Somit können ein oder mehrere Verbindungselemente platzsparend neben dem Gurtbock angebracht werden. Dadurch können Einschränkungen für angrenzende Bauteile vermieden werden. Dies betrifft beispielsweise Polster und/oder eine Rückwand hinter einer Sitzgruppe oder dergleichen. Ferner ist eine schraubbare Ausführung realisierbar.

Vorteilhaft ist es auch, dass das Verbindungselement so ausgeführt werden kann, dass dieses nicht über den Gurtbock nach vorne oder hinten bezogen auf die Fahrtrichtung hinausragt.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug mit einer Gurtbockanordnung in einer auszugsweisen, schematischen, räumlichen Darstellung entsprechend einem Ausführungsbeispiel der Erfindung, wobei ein Seitenwandteil des Freizeitfahrzeugs und der Gurtbock dargestellt sind und
- Fig. 2 bis 6: mögliche Ausgestaltungen eines Verbindungselements für das in Fig. 1 gezeigte Freizeitfahrzeug in schematischen, räumlichen Darstellungen und
- Fig. 7: eine abgewandelte Ausgestaltung der Verbindung mit der Seitenwand in einer schematischen Darstellung.

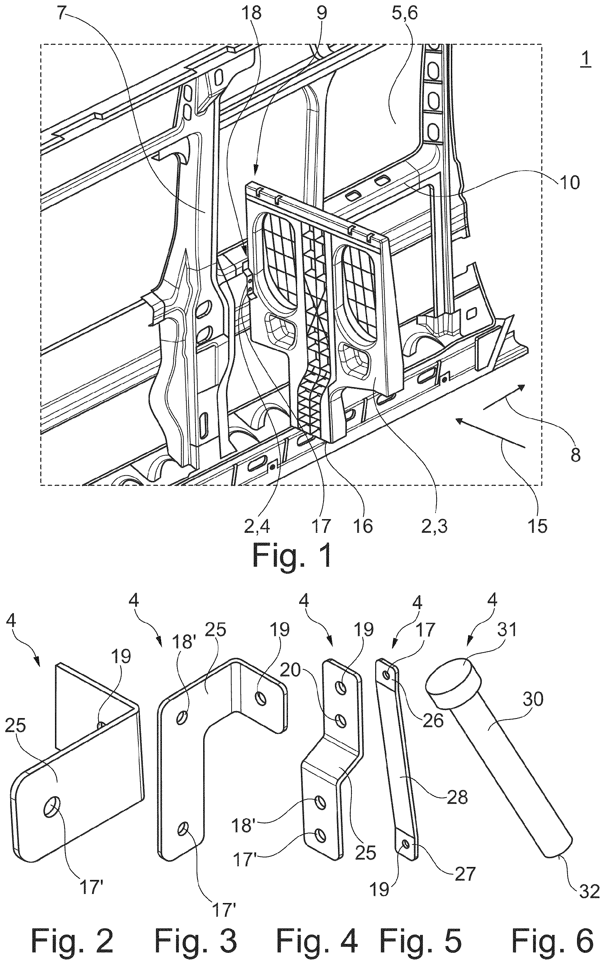

Fig. 1 zeigte ein Freizeitfahrzeug 1 mit einer Gurtbockanordnung 2 in einer auszugsweisen, schematischen, räumlichen Darstellung entsprechend einem Ausführungsbeispiel. Das Freizeitfahrzeug 1 kann insbesondere als Wohnmobil ausgestaltet sein. Die Gurtbockanordnung 2 weist in diesem Ausführungsbeispiel einen Gurtbock 3 und ein Verbindungselement 4 auf. Der Gurtbock 3 ist hierbei neben einer Seitenwand 5 des Freizeitfahrzeugs 1 angeordnet.

Zur Vereinfachung der Darstellung ist nur ein Seitenwandelement 6 der Seitenwand 5 dargestellt. Die Seitenwand 5 weist eine Säule 7 auf, die in diesem Ausführungsbeispiel eine C-Säule 7 ist. Eine Fahrtrichtung 8 des Freizeitfahrzeugs 1 ist parallel zur Seitenwand 5 orientiert.

Bezüglich der Fahrtrichtung 8 des Freizeitfahrzeugs 1 befindet sich das Verbindungselement 4 zumindest im Wesentlichen in dem Seitenbereich 9 des Gurtbocks 3. Der Seitenbereich 9 befindet sich hierbei seitlich neben dem Gurtbock 3 direkt zwischen der Seitenwand 5 und dem Gurtbock 3. Das Verbindungselement 4 dient zum Verbinden des Gurtbocks 3 mit der Seitenwand 5 an einer geeigneten Stelle. In diesem Ausführungsbeispiel ist das Verbindungselement 4 einerseits mit dem Gurtbock 3 und andererseits mit einer Längsstrebe 10 der Seitenwand 5 verbunden.

Im montierten Zustand befindet sich dann das Verbindungselement 4 zumindest im Wesentlichen innerhalb einer Projektion 15 des Gurtbocks 3 auf die Seitenwand 5. Die Projektion 15 ist hierdurch durch die Projektionsrichtung 15 veranschaulicht und entspricht anschaulich einem Schattenwurf des Gurtbocks 3 auf die Seitenwand 5 in der Projektionsrichtung 15. Somit wird erreicht, dass der Seitenbereich 9 des Gurtbocks 3, in dem die Befestigung erfolgt, zumindest im Wesentlichen innerhalb der Projektion 15 des Gurtbocks 3 liegt, so dass sich das Verbindungselement 4 bezüglich der Fahrtrichtung 9 nicht wesentlich nach vorne oder hinten von dem Gurtbock 3 erstreckt.

Die Projektion 15 beziehungsweise die Projektionsrichtung 15 ist einerseits senkrecht zu der Fahrtrichtung 8 und andererseits parallel zu einem Laufboden des Freizeitfahrzeugs 1 orientiert. Der Laufboden ist hierbei parallel zu einer Unterseite 16 des Gurtbocks 3.

Das Verbindungselement 4 ist in diesem Ausführungsbeispiel durch Schraubverbindungen 17, 18 mit dem Gurtbock 3 verbunden. In der Fig. 1 sind hierbei Schraubverbindungen 17, 18 veranschaulicht. Diese entsprechen Schraublöchern 17', 18', die anhand der Fig. 2 bis 5 bei unterschiedlichen Ausgestaltungen des Verbindungselements 4 gezeigt sind. Entsprechend sind Schraubverbindungen 19, 20 vorgesehen, um das Verbindungselement 4 mit der Seitenwand 5 zu verbinden. Diese Schraubverbindungen 19, 20 sind in den Fig. 2 bis 5 durch Schraubbohrungen 19', 20' möglicher Ausgestaltungen des Verbindungselements 4 veranschaulicht.

Somit kann das Verbindungselement 4 im montierten Zustand beabstandet zu der C-Säule 7 des Freizeitfahrzeugs 1 angeordnet und mit der Seitenwand 5 verbunden sein. Hierbei eignet sich besonders die Längsstrebe 10 zur Verbindung.

Fig. 2 bis 6 zeigen mögliche Ausgestaltungen des Verbindungselements 4 der in Fig. 1 gezeigten Gurtbockanordnung 2 beziehungsweise des in Fig. 1 gezeigten Freizeitfahrzeugs 1. Wie in Fig. 2 dargestellt ist, kann das Verbindungselement 4 als L-förmiges Teil 25 ausgestaltet sein. Wie es in Fig. 3 dargestellt ist, kann das Verbindungselement 4 auch ein L-förmiges Teil 25 aufweisen. Je nach Ausgestaltung können hierbei ein oder mehrere Schraubverbindungen 17, 18 beziehungsweise Schraublöcher 17', 18' vorgesehen sein. Entsprechend können ein oder mehrere Schraubverbindungen 19, 20 beziehungsweise Schraublöcher 19', 20' vorgesehen sein, wie es auch anhand Fig. 4 veranschaulicht ist.

Wie es in Fig. 4 gezeigt ist, kann das Verbindungselement 4 auch ein Doppel-L-förmiges Teil 25 aufweisen. In Fig. 5 ist eine Ausgestaltung des Verbindungselements 4 dargestellt, bei der ein erstes Befestigungsteil 26, ein zweites Befestigungsteil 27 und ein Verbindungsteil 28 vorgesehen sind, wobei die Befestigungsteile 26, 27 parallel zueinander orientiert sind. Hierdurch kann eine besonders kompakte und materialsparende Verbindung realisiert werden.

Speziell die Ausgestaltungen entsprechend den Fig. 4 und 5 ermöglichen eine Anordnung des Verbindungselements 4 vollständig innerhalb der Projektion 15 des Gurtbocks 3 auf die Seitenwand 5.

Bei der in Fig. 6 gezeigten Ausgestaltung des Verbindungselements 4 sind ein Bolzen 30 und ein an dem Bolzen 30 angebrachter, zylinderförmiger Kopf 31 vorgesehen. Hierbei kann auch eine Rotation ermöglicht werden. Die Befestigung kann einerseits an dem Kopf 31 mittels einer Schraubverbindung und andererseits an einer Stirnseite 32 des Bolzens 30 mit jeweils einer Schraubverbindung realisiert werden.

Die Verbindungselemente 4 entsprechend den dargestellten Ausgestaltungen können aus einem duktilen Werkstoff gebildet sein. Speziell die anhand der Fig. 2 bis 5 gezeigten Ausgestaltungen ermöglichen hierbei eine vorteilhafte Verformung des Verbindungselements 4 zum Abbau von Energie. Allerdings kann auch das in Fig. 6 dargestellte Verbindungselement 4 durch eine geeignete Wahl des Bolzens 30 duktil und somit verformbar ausgestaltet werden. Insbesondere kann hierbei eine geometrische Ausgestaltung des Bolzens 30, insbesondere ein Durchmesser des Bolzens 30, in Bezug auf den jeweiligen Anwendungsfall vorgegeben sein.

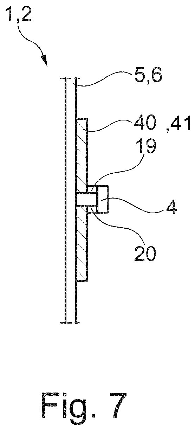

Fig. 7 zeigt eine schematische, auszugsweise Darstellung einer abgewandelten Ausgestaltung des Freizeitfahrzeugs 1. Hierbei ist an der Seitenwand 5 eine Seitenwandverstärkung 40 vorgesehen, die in diesem Ausführungsbeispiel als Verstärkungsplatte 41 ausgebildet ist. Das Verbindungselement 4 ist über die Schraubverbindungen 19, 20 mit der Seitenwandverstärkung 40 verbunden. Dadurch wird eine vorteilhafte Kraftverteilung auf die Seitenwand 5 erreicht, wenn über das Verbindungselement eine Kraft übertragen wird, wie es bei einem Unfall oder Crashtest der Fall ist. Die Verstärkungsplatte kann stoff- und/oder formschlüssig in die Seitenwand eingebaut sein.

Die Erfindung ist nicht auf die beschriebenen Ausführungsbeispiele beschränkt.

## Patentansprüche

1. Gurtbockanordnung (2) für ein Freizeitfahrzeug (1), insbesondere ein Wohnmobil, mit einem Gurtbock (3) und zumindest einem Verbindungselement (4), das den Gurtbock (3) mit einer Seitenwand (5) des Freizeitfahrzeugs (1) verbindet,
**dadurch gekennzeichnet,**
**dass** das Verbindungselement (4) im montierten Zustand bezüglich einer Fahrtrichtung (8) des Freizeitfahrzeugs (1) betrachtet zumindest im Wesentlichen in einem Seitenbereich (9) des Gurtbocks (3), der sich seitlich neben dem Gurtbock (3) befindet, mit der Seitenwand (5) des Freizeitfahrzeugs (1) verbunden ist.

2. Gurtbockanordnung nach Anspruch 1,
**dadurch gekennzeichnet,**
**dass** der Seitenbereich (9) des Gurtbocks (3) im montierten Zustand zumindest im Wesentlichen innerhalb einer Projektion (15) des Gurtbocks (3) auf die Seitenwand (5) liegt, die senkrecht zu der Fahrtrichtung (8) und parallel zu einem Laufboden des Freizeitfahrzeugs (1) ist.

3. Gurtbockanordnung nach Anspruch 1 oder 2,
**dadurch gekennzeichnet,**
**dass** das Verbindungselement (4) im montierten Zustand durch zumindest eine Schraubverbindung (17, 18) mit dem Gurtbock (3) verbunden ist und/oder dass das Verbindungselement (4) im montierten Zustand durch zumindest eine Schraubverbindung (19, 20) mit der Seitenwand (5) verbunden ist.

4. Gurtbockanordnung nach einem der Ansprüche 1 bis 3,
**dadurch gekennzeichnet,**
**dass** das Verbindungselement (4) im montierten Zustand beabstandet zu einer Säule (7), insbesondere der C-Säule (7), des Freizeitfahrzeugs (1) mit der Seitenwand (5) und/oder mit einer an der Seitenwand (5) ausgestalteten Längsstrebe (10) und/oder mit einer an der Seitenwand (5) vorgesehenen Seitenwandverstärkung (40), insbesondere Verstärkungsplatte (41), verbunden ist.

5. Gurtbockanordnung nach einem der Ansprüche 1 bis 4,
**dadurch gekennzeichnet,**
**dass** das Verbindungselement (4) zumindest ein L-förmiges Teil (25) umfasst.

6. Gurtbockanordnung nach Anspruch 5,
**dadurch gekennzeichnet,**
**dass** das Verbindungselement (4) ein Doppel-L-förmiges Teil (25) umfasst.

7. Gurtbockanordnung nach einem der Ansprüche 1 bis 4,
**dadurch gekennzeichnet,**
**dass** das Verbindungselement (4) ein erstes Befestigungsteil (26), das im montierten Zustand mit dem Gurtbock (3) verbunden ist, ein zweites Befestigungsteil (27), das im montierten Zustand mit der Seitenwand (5) verbunden ist, und ein Verbindungsteil (28) aufweist, das das erste Befestigungsteil (26) mit dem zweiten Befestigungsteil (27) verbindet, und dass das erste Befestigungsteil (26) und das zweite Befestigungsteil (27) zumindest näherungsweise parallel zueinander orientiert sind.

8. Gurtbockanordnung nach einem der Ansprüche 1 bis 4,
**dadurch gekennzeichnet,**
**dass** das Verbindungselement (4) einen Bolzen (30) und zumindest einen an dem Bolzen angebrachten, vorzugsweise zylinderförmigen Kopf (31) aufweist.

9. Gurtbockanordnung nach einem der Ansprüche 1 bis 8,
**dadurch gekennzeichnet,**
**dass** das Verbindungselement (4) zumindest teilweise aus einem duktilen Werkstoff gebildet ist.

10. Freizeitfahrzeug (1), insbesondere Wohnmobil, mit zumindest einer Gurtbockanordnung (2) nach einem der Ansprüche 1 bis 9 und zumindest einer der Gurtbockanordnung (2) zugeordneten Seitenwand (5), wobei der Gurtbock (3) über das zumindest eine Verbindungselement (4) mit der zumindest einen Seitenwand (5) verbunden ist.
